# EUROPÄISCHE PATENTSCHRIFT

(11) **EP 2 212 259 B1**
(45) Veröffentlichungstag und Bekanntmachung des Hinweises auf die Patenterteilung: **27.03.2024**
(21) Anmeldenummer: 08851433.6
(22) Anmeldetag: 06.11.2008
(51) Int. Cl.: C04B 24/38, C08B 31/00, C08L 3/04, C08B 31/12, C09J 103/04

(54) **BAUSTOFFZUSAMMENSETZUNG**
CONSTRUCTION MATERIAL COMPOSITION
COMPOSITION DE MATÉRIAU DE CONSTRUCTION

(30) Priorität: 20.11.2007 AT 18802007
(43) Veröffentlichungstag der Anmeldung: 04.08.2010
(73) Patentinhaber: Agrana Stärke GmbH, 1020 Wien (AT)
(72) Erfinder: MANN, Karl-Jürgen, A-1150 Wien (AT); KOZICH, Martin, A-1220 Wien (AT); WASTYN, Marnik Michel, A-2320 Schwechat (AT)
(74) Vertreter: SONN Patentanwälte GmbH & Co KG
(86) Internationale Anmeldenummer: PCT/AT2008/000401
(87) Internationale Veröffentlichungsnummer: WO 2009/065159

(56) Entgegenhaltungen:
- EP-A- 0 990 687
- EP-A- 1 176 254
- WO-A-00/05319
- WO-A-02/088188
- WO-A-02/088271
- WO-A-2007/041732
- GB-A- 1 515 036
- US-A- 2 500 950
- US-A- 4 093 798
- US-A- 4 112 222
- US-A- 5 575 840
- JULIE B HIRSCH ET AL: "02 CEREAL CHEMISTRY Understanding the Mechanism of Cross-Linking Agents (POCl 3 , STMP, and EPI) Through Swelling Behavior and Pasting Properties of Cross-Linked Waxy Maize Starches 1", CEREAL CHEMISTRY, 2002, pages 102-107, XP055749520,
- Pei Ni ET AL: "Synthesis of polyurethanes from solvolysis lignin using a polymerization catalyst: Mechanical and thermal properties", INTERNATIONAL JOURNAL OF POLYMERIC MATERIALS., vol. 52, no. 8, 1 January 2003 (2003-01-01), pages 685-707, XP055749509, US ISSN: 0091-4037, DOI: 10.1080/00914030304931
- L. Kuniak ET AL: "Study of the Crosslinking Reaction between Epichlorohydrin and Starch", Starch/Starke, vol. 24, no. 4, 1 January 1972 (1972-01-01), pages 110-116, XP055659686, DE ISSN: 0038-9056, DOI: 10.1002/star.19720240404

## Beschreibung

Die vorliegende Erfindung betrifft ein Additiv auf Stärkebasis zum Einsatz in Baustoffzusammensetzungen.

Der Anforderungskatalog für Baustoffzusammensetzungen, wie Bau- und Fliesenkleber laut EN12004, umfasst unter anderem die Benetzungsfähigkeit (klebeoffene Zeit), das Abrutschen und die Abbindezeit (Erstarrungszeit). Zur Einstellung dieser Mindestanforderungen und zum Erreichen darüber hinaus verbesserter Eigenschaften und Verarbeitungsbedingungen ist der Zusatz von wasserlöslichen bzw. -quellbaren Additiven auf Basis ausgewählter Naturstoffderivate und/oder synthetischer Polymerverbindungen bekannt. Routinemäßig in Verwendung sind insbesondere Mehrstoffgemische auf Basis von Celluloseethern, Stärkeethern und/oder synthetischen Polymerverbindungen. Schon der Zusatz geringer Mengen solcher Additive bzw. Additivgemische - üblicherweise weniger als 1 Gew.-% Trockensubstanz, bezogen auf die Trockenmörtelmasse - kann zu einer merklichen Verzögerung der Hautbildung und damit zu einer Verlängerung der klebeoffenen Zeit (auch "Offenzeit", "Open Time", Verarbeitbarkeitszeit von Fliesenklebermörteln nach dem Aufziehen bis zum Einsetzen der Hautbildung und somit einer verringerten Benetzbarkeit der eingelegten Fliesen), zu einem erhöhten Abrutschwiderstand und zu einer deutlichen Verzögerung des Abbindebeginns führen. Alle genannten Eigenschaften sind im Wesentlichen speziell modifizierten Stärkeethern zuzuschreiben, dabei handelt es sich üblicherweise um Hydroxypropylstärken auf Kartoffel- oder Maisstärkebasis.

In der EP 0530768 A ist ein Additivgemisch beschrieben, das eine Verbesserung der Standfestigkeit und der Verarbeitungseigenschaften und eine erhöhte Verdickung bewirkt. In diesem Gemisch sind Stärkeether enthalten, darunter Hydroxypropyl-, Carboxymethyl- und Hydroxypropylcarboxymethylstärke mit einem definierten Derivatisierungsgrad.

In der DE 102004030921 A wird ein mineralisches Klebersystem, ein Dünnbettmörtel, beschrieben, in dem auch Stärkeether in Kombination mit Methylcellulose zur Verbesserung der Verarbeitbarkeit eingesetzt werden. Hier ist angeführt, dass Dünnbettmörtel zum Verfugen von Mauerfugen auch als Kleber (Baukleber) bezeichnet werden.

In der EP 1264808 A sind Guarether beschrieben, die in Klebemörteln als Additiv zur Erhöhung der Standfestigkeit und als Verarbeitungshilfsmittel eingesetzt werden. Insbesondere sind hydroxypropylierte und hydroxyethylierte Guarderivate beschrieben, die bei hoher Standfestigkeit auch eine gute Benetzung und Korrigierbarkeit vermitteln. Diese Eigenschaft wird mit hohen Substitutionsgraden erreicht.

In der DE 10013577 ist ein Additivgemisch beschrieben, das unter anderem auch Stärkederivate enthält. Es handelt sich dabei um hydroxyalkylierte, carboxyalkylierte, alkylierte oder kationisierte Stärkeether, sowie um Stärkeester - also um einfach modifizierte Stärkeether.

In der EP0773198 ist ein Verdickersystem, enthaltend Celluloseether, Stärkeether und Schichtsilikate, beschrieben. Als besonders geeignet aus der Reihe der handelsüblichen Stärkeprodukte (Hydroxypropyl-, Hydroxyethyl- und Carboxymethylstärkeether) werden Hydroxypropylstärkeether genannt. Zur Verlängerung der klebeoffenen Zeit wird ein Verzögerer hinzugefügt.

In der US 5,575,840 ist eine Mischung aus Celluloseether und einer unmodifizierten, kaltwasserlöslichen Wachsmaisstärke beschrieben, wobei die Stärke einen Teil des teuren Celluloseethers ersetzen soll, ohne das Wasserrückhaltevermögen zu beeinträchtigen. Auf weitere Modifizierungen oder Eigenschaften wird nicht eingegangen.

In der US 4,654,085 sind gemischte Stärkeether aus der Gruppe der Hydroxyalkylalkylstärken, wie z.B. Hydroxypropylmethylstärke und Hydroxyalkylstärken, im Besonderen aber Hydroxypropylstärken wie Amylotex 8100, beschrieben, die die Abrutschfestigkeit verbessern und die Offenzeit verlängern. Die Verbesserung der Mörteleigenschaften geht aber auf Kosten des Abbindeverhaltens. Eine längere Offenzeit korreliert mit einem verzögerten Abbindebeginn des beschriebenen zementären Fliesenklebers und umgekehrt.

In der EP 0816299 A wird ein Stärkeether und/oder -ester als Baustoffzusatzmittel beansprucht, bei dem durch den gewählten Rohstoff (Amylopektinkartoffelstärke) keine Vernetzung vorgenommen wird und bessere Eigenschaften als mit bisherigen Stärkeethern auf Kartoffel- und Maisstärkebasis erzielt werden.

In der EP 1840098 A werden Methylstärkeether für Baustoffmischungen beansprucht, die zusätzlich noch hydroxyalkyliert sind und die unter anderem auch in Fliesenklebern eingesetzt werden. Laut den angegebenen Untersuchungsergebnissen weisen derartige Produkte nur hinsichtlich des Abbindeverhaltens und der Haftfestigkeiten Vorteile gegenüber handelsüblichen Stärkederivaten auf. Aus den angegebenen Daten geht auch eine Verkürzung der Offenzeit hervor. Dies entspricht also dem auch in der US 4,654,085 beschriebenen Effekt, dass ein früherer Abbindebeginn mit einer Verkürzung der Offenzeit korreliert.

In "Eigenschaften von Stärkeether: Vergleich der Calciumionenempfindlichkeit kommerzieller Produkte" (GdCh-Monographie, GdCh-Bauchemie-Tagung 2005, S. 63-69) sind kommerziell erhältliche Stärkeether für Fliesenkleberanwendungen genannt. Es handelt sich bei diesen Produkten vorwiegend um Hydroxypropylstärken, um Hydroxypropylcarboxymethylstärken, zum Teil auch vernetzt, und um Carboxymethylstärken. Allen Produkten ist gemein, dass sie entweder auf Kartoffelstärke oder Maisstärke basieren.

Somit ist bekannt, dass Stärkeether eine Verlängerung der klebeoffenen Zeit bewirken können, welche aber mit einer Abbindeverzögerung einher geht. Bei einer geringeren Abbindeverzögerung wird bekanntermaßen auch die Offenzeit verkürzt. Ziel der vorliegenden Erfindung ist es daher ein Additiv für Baustoffzusammensetzungen zur Verfügung zu stellen, welches sowohl die Abbindeverzögerung deutlich reduziert als auch eine Verlängerung der klebeoffenen Zeit bewirkt und dabei andere wichtige Eigenschaften wie Verdickerwirkung und Abrutschwiderstand gewährleistet.

Gegenstand der vorliegenden Erfindung ist eine mineralisch gebundene Baustoffzusammensetzung enthaltend ein kaltwasserlösliches, vernetztes Stärkederivat einer amylopektinreichen Stärke mit einem Amylopektingehalt von größer als 85% und mit einer 5%ig wässrigen Brookfieldviskosität des reinen Stärkederivats von 2000-7000 mPas bei 100upm und 20°C, wobei das kaltwasserlösliche, vernetzte Stärkederivat die zu derivatisierende Stärke durch eine gleichzeitige Hydroxypropylierung mit einem Substituierungsgrad MS von 0,1 und bis zu 0,8 und eine Vernetzungsreaktion bei einem molaren Verhältnis von Vernetzungsreagenz zu Anhydroglucoseeinheit (AGU) von 0,0015 bis 0,01, für 3 h bei 110 °C und einem Überdruck von 5 bar, erhältlich ist. Bei Einsatz der erfindungsgemäßen Stärkederivate wird eine Verlängerung der Verarbeitbarkeitszeit (klebeoffene Zeit) durch Inhibierung einer vorzeitigen Hautbildung auf der Dünnbettmörtelschicht in Verbindung mit einer kurzen Abbindezeit (Erstarrungszeit) bei gleichzeitiger Gewährleistung der besten Anwendungseigenschaften wie Abrutschfestigkeit und Verdickerwirkung erzielt.

Unter Baustoffzusammensetzungen werden im Rahmen der vorliegenden Erfindung mineralisch gebundene Zusammensetzungen, wie Hand- und Maschinenputze z.B. auf Gips-, Kalkhydrat- oder Zementbasis, Mörtel, insbesondere Dünnbettmörtel, Fliesenkleber, Spritzbetonmassen, Fußbodenausgleichsmassen, Zement- und Kalksandsteinextrudate, Fugenfüller und Spachtelmassen verstanden. Besonders bevorzugt sind dies zementäre, gipshaltige und kalkhaltige Zusammensetzungen der vorstehend genannten Art, ganz besonders bevorzugt Bau- und Fliesenkleber. Hauptanwendungsgebiet des erfindungsgemäßen Additivs sind Zementmörtel, insbesondere hydraulisch erhärtende Dünnbettmörtel zum Ansetzen bzw. Verlegen von keramischen und Kunststoffbekleidungen im Dünnbettverfahren, und zementäre Baukleber. Das erfindungsgemäß modifizierte Stärkederivat (durch Vernetzung und Hydroxypropylierung) bewirkt verbesserte Herstellbedingungen und Mörteleigenschaften von z.B. Fliesenklebern laut den Anforderungen, wie sie in EN12004 beschrieben sind.

Durch die gezielte Modifikation des verwendeten Stärkerohstoffs (amylopektinreiche Mais- oder Kartoffelstärke) mittels Vernetzung und Hydroxypropylierung können die Verarbeitungseigenschaften von Baustoffzusammensetzungen verbessert werden. Diese Verbesserungen sind u.a. ein erhöhter Abrutschwiderstand, eine Verlängerung der klebeoffenen Zeit, eine geringere Klebewirkung am Arbeitsgerät und ein geschmeidigerer Mörtel. Nun hat sich aber gezeigt, dass Amylopektinstärken, beispielsweise auf Knollen- oder Getreidebasis, in einem definierten Substitutionsfenster eine überraschende Eigenschaft zeigen. Das erfindungsgemäß modifizierte Stärkederivat ist vernetzt und hydroxypropyliert. Es zeichnet sich dadurch aus, dass es im Gegensatz zu marktgängigen Produkten eine sehr geringe Abbindeverzögerung (Erstarrungszeit) bei gleichzeitiger Erhaltung anderer Eigenschaften, wie klebeoffener Zeit, Abrutschfestigkeit und Verdickerwirkung aufweist. Bisher ist aus der Praxis nur bekannt, dass man für eine Verringerung der Abbindeverzögerung auch eine kürzere klebeoffene Zeit hinzunehmen hatte. Dies konnte durch den Einsatz erfindungsgemäß vernetzter Stärkederivate verbessert werden. Darüber hinaus weisen diese Produkte auch andere gute Verarbeitungseigenschaften auf und zeichnen sich durch eine besonders gute Standfestigkeit und zum Teil auch durch eine hervorragende Verdickerwirkung aus.

Somit ist es erfindungsgemäß möglich die Verarbeitungseigenschaften von Zementmörteln, insbesondere von hydraulisch erhärtenden Dünnbettmörteln, für die Verlegung von keramischen oder Kunststoffbekleidungen (Wärmedämmverbundsystem) und von zementären Bauklebern u.a. zum Verfugen von Mauerfugen, zu verbessern. Das erfindungsgemäße Stärkederivat kann in Kombination mit anderen Additiven, wie Celluloseethern, Dispersionspulver und/oder Beschleunigern, eingesetzt werden.

Unter hydraulischen Bindemitteln versteht man anorganische Bindemittel auf Zement-, Kalk- und Gipsbasis. In letzter Zeit kommen diese häufig in Mischung mit organisch-polymeren Bindemitteln zum Einsatz. Diese organisch-polymeren Bindemittel liegen für den praktischen Einsatz in Form von wässrigen Emulsionen bzw. Dispersionen vor. In gewissen Fällen können sie auch als alleinige Bindemittel verwendet werden.

Stärke ist ein pflanzliches Naturprodukt und stellt im Wesentlichen ein Glucosepolymer dar. Je nach Ausgangspflanze enthält eine Stärke eine mengenmäßig unterschiedliche Zusammensetzung zweier Bestandteile, nämlich von Amylose und Amylopektin. Amylose bildet im Allgemeinen den eher niedermolekulareren Teil und besteht hauptsächlich aus alpha-1,4-verknüpften Glucoseeinheiten. Es besitzt aber auch eine geringe Zahl an Verzweigungspunkten mit eher kurzen Seitenketten. Das Amylopektin ist deutlich höhermolekular und weist neben einer stärkeren alpha-1,6-Verzweigung auch längere Seitenketten auf.

Stärken natürlichen Ursprungs haben in der Regel einen Amylosegehalt von 20 % bis 30 %, abhängig von der Pflanzenart, aus der sie gewonnen werden. Es gibt aber auch amylopektinreiche Stärken, welche einen deutlich erhöhten Amylopektingehalt aufweisen, bzw. Produkte, welche einen erhöhten Amylosegehalt enthalten. Neben den natürlichen bzw. den durch Züchtungsmaßnahmen erhaltenen amylopektinreichen Stärketypen und Hochamylosetypen gibt es auch über chemische und/oder physikalische Fraktionierung gewonnene bzw. über gentechnisch veränderte Pflanzen hergestellte amylopektinreiche Stärken, die u.a. durch Unterdrückung der Amyloseproduktion erhalten werden. Bekannt sind amylopektinreiche Getreidestärken auf Basis von Maisstärke (Wachsmaisstärke), Reisstärke, Weizenstärke und Gerstenstärke. Neuerungen auf dem Gebiet der amylopektinreichen Stärken stellen amylopektinreiche Kartoffelstärke und amylopektinreiche Tapiokastärke dar. Das Anwendungsgebiet dieser amylopektinreichen Stärken liegt vorwiegend im Lebensmittelbereich. Sie konnten sich durch ihren höheren Preis bisher nur in wenigen technischen Anwendungen durchsetzen.

In der Literatur sind zahlreiche Verfahren beschrieben, mit denen der Amylosegehalt von Stärke auf chemischem Weg reduziert werden kann. Bei diesen Verfahren zur Reduktion des Amylosegehalts ist jedoch eine Behandlung bei erhöhten Temperaturen (in der Regel bei über 140°C) erforderlich, wodurch es gezwungenermaßen zu Abbauprodukten kommt. Derartige Abbauprodukte können jedoch in vielen Anwendungsbereichen stören. So ist im Baubereich mit einer deutlichen Abbindeverzögerung zu rechnen. Darüber hinaus ist das Fraktionierungsverfahren sehr aufwendig und kostenintensiv, sodass sich derartige Produkte für einen großtechnischen Einsatz bisher nicht durchsetzen konnten. Zur Umgehung der chemischen Trennung von Amylose und Amylopektin sind in den letzten Jahren Kartoffelpflanzen auch so gentechnisch modifiziert, dass die von diesen Pflanzen produzierte Stärke einen höheren Amylopektingehalt gegenüber herkömmlicher Kartoffelstärke aufweist. Durch Antisense-Inhibition eines GBSSGens (GBSS - granule bound starch synthase) ist eine solche Veränderung im Genom der Kartoffel erzielt worden. Die von solcherart modifizierten Pflanzen gebildete Stärke enthält praktisch keine Amylose mehr. Dieses Verfahren der gentechnischen Veränderung der Kartoffel ist erstmals in der WO 92/11376 beschrieben worden. Eine Stärke mit einem im Verhältnis zu gewöhnlicher Stärke verminderten Amylosegehalt wird als Amylopektin-Stärke bezeichnet. Neben der genannten antisense-Inhibition sind noch andere molekularbiologische Methoden zur Veränderung der Kartoffelpflanze im Hinblick auf die Produktion einer Amylose-reduzierten Stärke möglich.

Das erfindungsgemäße Stärkederivat weist einen Amylopektingehalt von größer 85%, insbesondere größer oder gleich 88%, größer oder gleich 90%, größer oder gleich 92%, größer oder gleich 95%, größer oder gleich 97%, größer oder gleich 98% oder größer oder gleich 99%, auf.

Das erfindungsgemäß eingesetzte Stärkederivat ist zudem das Produkt einer Vernetzung und einer Hydroxypropylierung.

Die Vernetzung erfolgt vorzugsweise durch Umsetzung mit Epichlorhydrin, di- oder polyfunktionellen Glycidylethern bzw. -estern (Butandioldiglycidether, Polyglyceroltriglycidether, Cyclohexandimethanoldiglycidether, Glycerintriglycidether, Neopentylglycoldiglycidether, Pentaerythrittetraglycidether, Trimethylolpropantriglycidether, Perhydrobisphenoldiglycidether), Phosphoroxychlorid oder Trimetaphosphatsalzen (Natriumtrimetaphosphat). Weiters kann die Vernetzung beispielsweise mit Adipinsäure, Polyphosphaten, 1,3-Dichlor-2-propanol, gegebenenfalls im Gemisch mit (Poly-)Aminen, weiters mit Di- oder Polyepoxiden, zwei- oder mehrwertigen Isocyanaten, linearen Dicarboxylsäureanhydriden, Adipinsäure, Dichloressigsäure, Divinylsulfonen, Zitronensäureacrolein, Acroleinpolyphosphat z.B. Hexametaphosphat, Biphenylen, N,N, -Dimethylol-imidzolidon-2 (DMEU), über eine Acetalvernetzung z.B. mit Formaldehyd, Dimethylolethylen-Harnstoff Aldehyden oder aldehydfreisetzenden Reagenzien, wie beispielsweise N,N'-Dimethylol-N,N'-ethylenharnstoff und gemischten Anhydriden von Carbonsäuren mit di- oder tribasischen Säuren, wie beispielsweise ein gemischtes Anhydrid aus Acetanhydrid mit Adipinsäure, erfolgen. Letzteres bzw. zahlreiche Varianten davon können unter dem Begriff Vernetzung mit Adipinsäure zusammengefasst werden. Als Vernetzungsreagenzien kommen auch noch weitere dem Fachmann bekannte Vernetzer in Frage, die angegebenen Reagenzien stellen nur eine Auswahl an möglichen Chemikalien dar.

Erfindungsgemäß ist das kaltwasserlösliche, vernetzte Stärkederivat durch gleichzeitige Hydroxypropylierung mit einem Substituierungsgrad MS von 0,1 und bis zu 0,8 und eine Vernetzungsreaktion bei einem molaren Verhältnis von Vernetzungsreagens (V) zu Anhydroglucoseeinheit (AGU) von 0,0015 bis 0,01, vorzugsweise bis 0,005 oder bis 0,0045, für 3 h bei 110 °C und einem Überdruck von 5 bar, erhältlich. 1 Kilogramm Stärke enthält ca. 6,2 Mol Anhydroglucoseeinheiten.

In bestimmten Ausführungsformen weist das Stärkederivat zumindest noch eine weitere Modifikation (neben der Vernetzung und der Hydroxypropylierung), insbesondere eine Substitution von Hydroxylgruppen der Glukoseeinheiten, auf. Solche Modifikationen sind z.B. Veretherungen oder Veresterungen. Sofern nichts anders Lautendes unten definiert ist, umfassen die Substituenten organische Reste mit bis zu 20, vorzugsweise bis zu 15, insbesondere bis zu 10, im Speziellen bis zu 6, Kohlenstoffatomen. Im Folgenden werden einige Derivatisierungen beschrieben, die alleine oder in Kombination miteinander zur weiteren Derivatisierung der Stärkederivate vorgesehen werden können. Die Art der Derivatisierung und die Rohstoffbasis der verwendeten Stärke (z.B. amylopektinreiche Kartoffel- oder amylopektinreiche Maisstärke) hängen sehr eng mit dem speziellen Einsatzbereich des jeweiligen Produktes zusammen. Die Methoden hiezu sind an sich bekannt. Im Speziellen sollen hier die Modifikation im Slurry und im Kleister genannt werden, auch Trockenderivatisierungen und Modifikation über Extrusionsverfahren sind möglich.

Aus der Literatur ist eine Vielzahl von Derivaten bekannt, deren Herstellung u.a. in dem Werk "Starch: Chemistry and Technology", R.L. Whistler, Kapitel X und XVII, 1984, und in "Modified Starches: Properties and Uses", herausgegeben von O.B. Wurzburg, Kapitel 2-6, und 9-11, CRC Press, 1986, gut zusammengefasst ist. Im Allgemeinen unterscheidet man bei Stärkederivaten zwischen Stärkeether und Stärkeester. Des Weiteren kann zwischen nichtionischen, anionischen, kationischen und amphoteren als auch hydrophoben Stärkederivaten differenziert werden, welche sowohl über eine Slurry-, Kleister-, Halbtrocken- oder Trockenderivatisierung als auch über eine Derivatisierung in organischen Lösungsmitteln hergestellt werden können.

Unter anionischer und nichtionischer Modifizierung der Stärke werden jene Derivate zusammengefasst, bei denen die freien Hydroxylgruppen der Stärke durch anionische oder nichtinonische Gruppierungen substituiert werden.

Die anionische und nichtionische Derivatisierung lässt sich prinzipiell auf zwei Arten durchführen:
a) Die Modifizierung erfolgt dermaßen, dass es zu einer Veresterung der Stärke kommt. Als Modifizierungsmittel dienen anorganische oder organische verschiedenwertige, meist zweiwertige, Säuren bzw. Salze davon bzw. Ester davon bzw. Anhydride davon. So sind u.a. folgende Säuren (ihre Aufzählung ist nur beispielhaft) geeignet: o-Phosphorsäure, m-Phosphorsäure, Poly-Phosphorsäure, unterschiedlichste Schwefelsäuren, verschiedenste Kieselsäuren, die unterschiedlichsten Borsäuren, Essigsäure, Oxalsäure, Bernsteinsäure und ihre Derivate, Glutarsäure, Adipinsäure, Phthalsäure, Citronensäure. Auch gemischte Ester oder Anhydride können verwendet werden. Bei der Veresterung der Stärke kann diese auch mehrfach erfolgen, so dass beispielsweise Distärkephosphorsäureester hergestellt werden können. Vorzugsweise ist die erfindungsgemäß eingesetzte Stärke dabei das Produkt einer Veresterung mit Mono-, Di- oder Tricarbonsäuren mit einer Alkylkette mit 1 bis 30 Kohlenstoffatomen oder ein Carbamat, besonders bevorzugt acyliert, wie succinyliert, octenylsuccinyliert, dodecylsuccinyliert oder acetyliert.
b) Die Modifizierung erfolgt dermaßen, dass es zu einer Veretherung der Stärke kommt. Besonders bevorzugt wird dabei, wenn die erfindungsgemäß eingesetzte Stärke eine Methyl-, Ethyl-, Hydroxyethyl-, Hydroxypropyl-, Hydroxybutyl-, Carboxymethyl-, Cyanoethyl-, Carbamoylethyl-etherstärke oder ein Gemisch derselben ist.

Die Stärke ist dadurch beispielsweise primär, oder zusätzlich mit Phosphat, Phosphonat, Sulfat, Sulfonat oder Carboxylgruppen substituiert. Dies wird beispielsweise durch Umsetzung der Stärke mit Halogencarbonsäuren, Chlorhydroxyalkylsulfonaten oder Chlorhydroxyalkylphosphonaten erreicht.

Unter kationischer Modifizierung der Stärken werden jene Derivate zusammengefasst, wo durch Substitution eine positive Ladung in die Stärke eingebracht wird. Die Kationisierungsverfahren erfolgen mit Amino-, Imino-, Ammonium-, Sulfonium- oder Phosphoniumgruppen. Methoden zur Herstellung von kationisierten Stärken sind beispielsweise von D.B. Solareck: Cationic Starches, in dem Buch von O.B. Wurzburg (Hrsg.): Modified Starches: Properties and Uses, CRC Press Inc., Boca Raton, Florida (1986), S. 113 - 130, beschrieben. Solche kationischen Derivate enthalten bevorzugt stickstoffhaltige Gruppen, insbesondere primäre, sekundäre, tertiäre und quartäre Amine bzw. Sulfonium- und Phosphoniumgruppen, die über Ether- oder Esterbindungen gebunden sind. Bevorzugt ist der Einsatz von kationisierten Stärken, die tertiäre und elektropositiv geladene quaternäre Ammoniumgruppen enthalten.

Eine weitere Gruppe stellen die amphoteren Stärken dar. Diese enthalten sowohl anionische als auch kationische Gruppen, wodurch ihre Anwendungsmöglichkeiten sehr spezifisch sind. Meist handelt es sich um kationische Stärken, die entweder durch Phosphatgruppen oder durch Xanthate zusätzlich modifiziert werden. Eine Darstellung zur Herstellung solcher Produkte ist ebenfalls von D.B. Solareck: Cationic Starches, in dem Buch von O.B. Wurzburg (Hrsg.): Modified Starches: Properties and Uses, CRC Press Inc., Boca Raton, Florida (1986), S. 113-130, beschrieben.

Als eine bevorzugte Derivatisierung erfolgt eine mehrfache Veretherung und/oder Veresterung. Dabei sind Alkylierungen, Alkoxylierungen und Carboxyalkylierungen besonders bevorzugt. Man unterscheidet zwischen einfachen Stärkeestern und gemischten Stärkeestern, wobei der (die) Substituent(en) des Esters verschiedenartig sein kann (können): im Esterrest RCOO- kann der Rest R ein Alkyl-, Aryl-, Alkenyl-, Alkaryl- oder Aralkylrest mit 1 bis 20 Kohlenstoffatomen, vorzugsweise 1 bis 17 Kohlenstoffatomen, bevorzugt mit 1 bis 6 Kohlenstoffatomen, sein. Diese Produkte schließen die Derivate Acetat (hergestellt aus Vinylacetat oder Acetanhydrid), Propionat, Butyrat, Stearat, Phthalat, Succinat, Oleat, Maleinat, Fumarat und Benzoat ein.

Veretherungen erfolgen großteils durch Umsetzung mit Alkylenoxiden (Hydroxyalkylierung), die 1 bis 20 Kohlenstoffatome, vorzugsweise 2 bis 6 Kohlenstoffatome, insbesondere 2 bis 4 Kohlenstoffatome, enthalten, insbesondere durch Verwendung von Ethylen- und Propylenoxid. Es können aber auch Methyl-, Carboxymethyl-, Cyanethyl- und Carbamoylether hergestellt und verwendet werden. Als Beispiel für eine Carboxyalkylierung sei die Reaktion von Stärke mit Monochloressigsäure oder deren Salzen angeführt. Weiters seien speziell noch hydrophobierende Veretherungsreagenzien, wie Glycidylether oder Epoxide, genannt. Die Alkylkettenlänge der genannten Reagenzien liegt zwischen 1-20 Kohlenstoffatomen, darüber hinaus sind auch noch aromatische Glycidylether wichtig.

Als Beispiel für eine Derivatisierung mit Glycidylethern seien o-Kresol-glycidether, Polypropylendi-glykolglycidether, tert-Butylphenylglycidether, Ethylhexyl-glycidether, Hexandiolglycidether und Neodekansäure-glycidester genannt.

Eine weitere Möglichkeit der Alkylierung besteht in der Alkylierung über Alkylhalogenide, beispielsweise über Methylchlorid, Dialkylcarbonate, z.B. Dimethylcarbonat (DMC) oder Dialkylsulfat z.B. Dimethylsulfat.

Der Substituierungsgrad MS (molare Substitution: mol Substituent/mol Glukose-Einheit) ist mindestens 0,01, vorzugsweise mindestens 0,02, 0,03, 0,04, oder mindestens 0,05, 0,06, 0,07, 0,08, oder 0,09, am meisten bevorzugt mindestens 0,1, und bis zu 2,0, 1,0, 0,8, 0,75, 0,7 oder bis zu 0,6. Bei der Carboxyalkylierung, insbesondere einer Carboxymethylierung, liegt vorzugsweise der Carboxyalkylierungsgrad DS (degree of substitution: mol Substituent (direkt an Glukose-Einheit gebunden)/mol Glukose-Einheit) zwischen 0,01 und 0,25, bevorzugt zwischen 0,04 und 0,2.

Neben den Ethern und/oder Estern bzw. zusätzlich zu dieser Derivatisierung kann das erfindungsgemäß verwendete kaltwasserlösliche, vernetzte Stärkederivat auch in unterschiedlichem Ausmaß oxidiert, thermochemisch abgebaut, dextriniert oder extrudiert sein.

Die für die Veresterungen, Veretherungen und Vernetzungen verwendeten Stärken können zudem über thermisch-physikalische Modifikationen getempert (im Slurry) oder inhibiert (Trocken- bzw. Halbtrockenreaktion) sein.

Stärken können auch über Hydrophobierungsreagenzien modifiziert werden. Veretherte hydrophobe Stärken erhält man dabei, wenn die hydrophoben Reagenzien als funktionelle Gruppe ein Halogenid, ein Epoxid, ein Glycidyl, ein Halogenhydrin, eine Carbonsäure oder eine quaternäre Ammoniumgruppe enthalten. Für veresterte hydrophobe Stärken enthält das hydrophobe Reagens zumeist ein Anhydrid. Die angeführten Reaktionen können dabei auch unter Anwesenheit eines Tensides ablaufen. Eine Hydrophobierung der Stärke kann auch über eine Abmischung einer Stärke oder eines Stärkederivates mit Fettsäureester erfolgen. Erfindungsgemäß ist das Stärkederivat hydrophobiert, insbesondere mit einem Derivatisierungsgrad der Hydrophobierung wie oben zur Substituierung angegeben, vorzugsweise zwischen MS von 0,01 bis 0,1. All die genannten Modifikationen der Stärke können nicht nur durch Umsetzung nativer Stärke erzielt werden, auch abgebaute Formen können zum Einsatz kommen. Die Abbauvorgänge können auf mechanische, thermische, thermochemische oder enzymatische Weise erfolgen. Dadurch lässt sich die Stärke nicht nur strukturell verändern, die Stärkeprodukte können auch kaltwasserlöslich bzw. kaltwasserquellbar gemacht werden (z.B. Dextrinierung und Extrusion) .

Schließlich kann die Stärke auch als Pfropf-Polymer oder als Pfropf-Copolymer vorliegen, wie beispielsweise mit Produkten aus der Gruppe der Polyvinylalkohole, Acrylamide oder Monomere bzw. Polymere ausgehend von Kohlenwasserstoffen. Dabei kann das Starke-Pfropf-(Co)-Polymerisat bevorzugt als Emulsionspolymerisat vorliegen.

In der Baustoffindustrie, speziell im Trockenmörtelbereich, kommen abgesehen von Spezialanwendungen, wie dem Einsatz von hochvernetzter Kochstärke, überwiegend kaltwasserlösliche Stärkederivate zum Einsatz. Auch hier sind die verwendeten Produktionsverfahren bekannt. Es sind dies u.a. Verkleisterung und Walzentrocknung im dünnen Film oder Extrusion. Bei der Walzentrocknung wird durch den Einfluss von Temperatur und Scherkräften entweder die granuläre Stärke selbst aufgeschlossen oder ein bereits aufgeschlossener Kleister getrocknet. In beiden Fällen verursacht die Walzentrocknung eine Auflösung der nativen Stärkestrukturen. Zur optimalen Entfaltung der Eigenschaften der Stärkederivate für den Baubereich ist der richtige Aufschlussgrad von großer Bedeutung. Ein besonderes Verfahren stellt dabei die Extrusion dar. Hier bietet sich die Möglichkeit, modifizierte Stärke durch physikalische Einflüsse unterschiedlich stark abzubauen und gleichzeitig zu einem kaltwasserlöslichen bzw. kaltwasserquellbaren Produkt umzusetzen. Darüber hinaus ist mit dieser Technologie auch die direkte chemische Derivatisierung von Stärke kostensparend durchführbar.

Die Charakterisierung der Stärkederivate erfolgt über die im Folgenden angegebenen Methoden:
Die Viskosität wird über eine Brookfieldmessung bestimmt. Dazu wird ein 5%iger Kleister (in Trockensubstanz) mit dem kaltwasserlöslichen Stärkederivat angerührt, wobei Wasser vorgelegt und das fein vermahlene Pulver unter Rühren mit einem Turbinenrührer bei 1000upm eingestreut wird. Sobald die Probe eingebracht ist, wird weitere 10 Minuten bei 1500upm weitergerührt und anschließend die Viskosität mit einem Brookfield-Rotationsviskosimeter bei 20°C und einer Drehgeschwindigkeit der Spindel von 100upm gemessen.

Das erfindungsgemäß verwendete reine Stärkederivat weist dabei eine 5%ige wässrige Brookfieldviskosität von 2000-7000 mPas bei 100 upm und 20°C auf.

Der Vernetzungsgrad von Stärken kann unabhängig von der Art des Vernetzungsreagenz leicht über den molekular-dispersen Anteil bestimmt werden.

Zur Bestimmung der Substitutionsgrade z.B. der Hydroxyalkylierung von Stärkeethern wird die modifizierte Stärke mit hei-βer, konzentrierter Iodwasserstoffsäure umgesetzt (Zeisel-Spaltung) und die entstehenden Alkyliodide und Alkylene gaschromatographisch getrennt und analysiert. Bei mittels Epichlorhydrin vernetzten Produkten kann durch diese Methode auch der Vernetzungsgrad bestimmt werden. Die Bestimmung des Carboxymethylierungsgrades erfolgt durch eine säurekatalytische Spaltung des Polysaccharids und anschließende flüssigchromatographische Bestimmung. Der Substitutionsgrad mit Glycidethern und anderen eher hydrophoben Reagenzien sowie aller anderen Derivatisierungen kann zusätzlich noch mittels NMR bestimmt werden.

In einem weiteren Aspekt betrifft die vorliegende Erfindung die Verwendung des erfindungsgemäßen kaltwasserlöslichen, vernetzten Stärkederivats in zementären und/oder dispersionsmodifizierten Bauklebern, vorzugsweise in einem Fliesenkleber, im Speziellen zum Verlegen von keramischen Bekleidungen, oder in Wärmedämmverbundsystemen. Das erfindungsgemäße Stärkederivat kann in den benannten Anwendungen, speziell in Fliesenklebern, einen Teil der üblicherweise als Verdicker und Wasserretentionsmittel fungierenden Celluloseether, wie Methylcellulosen (MC), Ethylcellulosen (EC), Hydroxypropylmethylcellulosen (MHPC), Hydroxyethylmethylcellulosen (MHEC), Hydroxypropylcellulosen (HPC), Hydroxyethylcellulosen (HEC), ersetzen und so die Eigenschaften des Gesamtsystems verbessern. In bekannten Formulierungen werden bis zu 45% eines Celluloseethers durch Stärkeether ersetzt, wobei das Cellulosederivat bis zu einer Einsatzmenge von 0,8% bezogen auf die Gesamttrockenmörtelmenge eingesetzt wird ("Recent Developments in Dry Mortar Technology in Europe" (Technical Bulletin 01: South East Asia Drymix Mortar Association, S. 12, Tab. 7 und Drymix Mortar Yearbook 2007, S. 22, Fig. 4 und Ullmann's Encyclopedia of Industrial Chemistry 2002, Dry Mortars, Bayer R. und Lutz H.). Der erfindungsgemäße Stärkeether liegt vorzugsweise in Mengen von 0,001 bis 0,4 Gew.- % bezogen auf die Gesamttrockenmasse in der Baustoffzusammensetzung vor.

Ferner können die Baustoffzusammensetzungen noch Zusatzstoffe und/oder Modifizierungsmittel enthalten. Dies können zum Beispiel Hydrokolloide, Kunststoffdispersionspulver, Entschäumer, Quellmittel, Füllstoffe, Leichtstoffzusatzstoffe, Polyacrylate, Polyacrylamide, Hydrophobierungsmittel, Luftporenbildner, synthetische Verdicker, Dispergierhilfsmittel, Verflüssiger, Verzögerer, Beschleuniger oder Stabilisatoren sein. Ferner sind Füllstoffe, wie Quarzsand, Dolomit, Kalksandstein, Calciumsulfat-Dihydrat, als Zusatzstoffe und/oder Modifizierungsmittel geeignet.

Das erfindungsgemäße Stärkederivat kann trocken mit den anderen Additiven zu einem sogenannten Trockenmörtel formuliert und so zielgerichtet an die jeweilige Anwendung angepasst werden.

Die vorliegende Erfindung wird nachstehend durch Ausführungsbeispiele erläutert, ohne auf diese eingeschränkt zu sein.

### Beispiele:

### Beispiel 1: Stärkeether SE4, Herstellung eines vernetzten Hydroxypropylstärkeethers

1kg native Wachsmaisstärke (6mol) wird in einer Konzentration von 35% als Slurry eingerührt und dieser Slurry in einen Druckreaktor überführt. Hier wird nun eine katalytische Menge an NaOH (5g, 0,125mol) zugegeben, sodass die Stärke bei Raumtemperatur aber noch nicht verkleistert. Nach dem Spülen des Kopfraums des Reaktors mit Stickstoff wird ein Vernetzungsreagens, z.B. Epichlorhydrin (1g, 0,01mol - V/AGU=0,0018), und ein Veretherungsreagens, z.B. Propylenoxid (0,6kg, 10,3mol - MS_{theore-tisch}=1,5), zugegeben. Nun wird der Reaktor geschlossen, ein Überdruck von 5bar angelegt und das Reaktionsgefäß auf 110°C erwärmt. Die Reaktion wird dann 3h bei dieser Temperatur durchgeführt. Danach werden Nebenprodukte oder nicht umgesetztes Reagenz durch das Durchleiten von Dampf entfernt und das Produkt mit Schwefelsäure neutralisiert. Das nunmehr vorliegende Kleisterprodukt wird durch Walzentrocknung getrocknet und fein vermahlen.

### Beispiel 2: Fliesenkleber

Im Folgenden ist eine sehr einfache, aber repräsentative Fliesenkleberrezeptur (Rezeptur 1) in Anlehnung an "Recent Developments in Dry Mortar Technology in Europe" (Technical Bulletin 01: South East Asia Drymix Mortar Association, S. 12, Tab. 7) und an US2007/0221098A1 dargestellt, mit der die weiteren Untersuchungen durchgeführt wurden. Die Ergebnisse lassen sich aber auch auf andere Systeme übertragen. Die Untersuchungen erfolgten bei einer Umgebungstemperatur von 2312°C und einer relativen Luftfeuchte von 5015%.

**Tabelle 1: Rezeptur 1**

| | |
|---|---|
| 35% | CEM I 42,5 R Milke Classic |
| 64,60% | Quarzsand |
| 0,35% | Celluloseether (MHPC) |
| 0,05% | Stärkeether (13% des CE) |

Die Einzelbestandteile werden von Hand trocken mit den Additiven gemischt und in einem verschlossenen Gefäß (Plastikdose mit Deckel) geschüttelt. In einem Gummibecher wird die entsprechende Menge Wasser vorgelegt und das trockene Material über 15 sec eingestreut und mit einem handelsüblichen Küchenmixer mit Knetern eingerührt: Rühren für 10 sec auf Stufe 1, dann 60 sec auf Stufe 2. Nach einer Reifezeit von 5 min wird nochmals 15 sec auf Stufe 1 gerührt. Die so hergestellten Mörtel wurden durch die im Folgenden angegebenen Untersuchungsmethoden charakterisiert.

Nach dem Einrühren erfolgt sofort die Viskositätsmessung mit einem Helipath Spindelsystem. Zur besseren Vergleichbarkeit der Messergebnisse wird die gleiche Konsistenz eingestellt, definiert als eine Mörtelviskosität von ca. 500Pa.s bei 5upm. Die Einstellung dieser Konsistenz erfolgt über die Wassermenge (W/F - Wasser/Feststoff-Gehalt), wodurch auch der Wasseranspruch der verschiedenen Stärketypen bestimmt wird.

Zur Bestimmung des Abrutschwiderstands (in Anlehnung an EN1308) wurde der Fliesenkleber mit einer Kammspachtel auf eine waagrecht liegende Kunststoffplatte aufgezogen und nach 2 min eine trockene Steinzeugfliese [einheitliches Flächengewicht von ca. 2g/cm2] in das Fliesenkleberbett eingelegt. Die Position der Fliese wird nun markiert und die Kunststoffplatte waagrecht aufgestellt. Nach 10 min wird die Abrutschlänge (Distanz zwischen Markierung und nunmehriger Position der Fliesenoberkante) bestimmt.

Bei der Messung der Open Time wird der Zeitraum bestimmt, in dem sich eine Fliese noch in ein aufgekämmtes Fliesenkleberbett eindrücken lässt und nach Belastung und einer späteren Entnahme noch zu mindestens 50% benetzt vorliegt. Die Reduktion der Benetzung ist mit dem Beginn der Hautbildung gleichzusetzen. Die Messungen erfolgten in Anlehnung an die Methodenbeschreibung in DE10013577 (S.10) bzw. EP1840098 (S.5 [51]). Für die Untersuchung wird der Fliesenkleber aufgezogen und je nach Fliesenkleberzusammensetzung nach einer Latenzzeit mit dem Einlegen der Fliesen begonnen. In Beispielmörtel wird mit dem Einlegen nach 20 min begonnen. Dazu wird eine 5x5cm Steinzeugfliese (nicht saugend: Wasseraufnahme <0,5%) ins Kleberbett eingesetzt und mit einem 2kg Gewicht für 30 sec beschwert. Danach wird die Fliese sofort wieder herausgeklappt und die Benetzung mit dem Kleber bewertet. Sind mehr als 50% der Fläche benetzt wird im 10-Minutenintervall die nächste Messung durchgeführt. Bei einer Benetzung von weniger als 50% ist die Open Time zu Ende. Angegeben ist die relative Open Time in % bezogen auf die Open Time des marktüblichen Produkts M1 (Tylovis SE7).

Geprüft wurde ferner das Abbindeverhalten vom Anrühren eines Fliesenklebers über den Erstarrungsbeginn bis zum Erstarrungsende, wobei in Tabelle 4 nur das Erstarrungsende angegeben wird. Über das Eindringen einer Nadel [automatisches Vicat-Nadelprüfgerät] in den Fliesenkleber wurde das Abbindeverhalten ermittelt. Für die Durchführung der Untersuchungen wurde der Kleber nach dem Anrühren luftblasenfrei unter leichtem Stochern in einen Kunststoffbecher [Höhe der Mörtelschicht 40 mm] gefüllt. Anschließend wurde die Oberfläche ohne Druck unter sägender Bewegung mit einem breiten Spachtel plan abgezogen und die Mörtel bei 20°C unter Wasser gelagert und gemessen. Der Erstarrungsbeginn ist als Zeitpunkt definiert, zu dem die Eindringtiefe der Vicatnadel nur noch 36 mm beträgt, als Erstarrungsende der Zeitpunkt, zu dem die Eindringtiefe nur noch 4 mm beträgt.

### Beispiel 3: Vergleichswerte

In Tabelle 2 sind einige Stärkeether beispielhaft charakterisiert, wobei SE1-SE10 Beispielmuster und M1-M2 marktgängige Produkte sind. M1 ist Tylovis SE7, M2 ist Casucol 301. SE1-SE4, SE8 und SE9 sind erfindungsgemäße Muster. SE1 und SE10 unterscheiden sich abgesehen vom Rohstoff nicht in ihrer Derivatisierung. Unvernetzte Produkte sind in der Spalte "Vernetzung" mit "0" bezeichnet. Mit der Abkürzung APS werden Amylopektin-reiche Stärken bezeichnet. Mit "MS PO" wird der molare Substitutionsgrad mit Propylenoxid bezeichnet, mit "DS CM" der Substitutionsgrad mit Carboxymethylgruppen.

In Tabelle 3 sind die Anwendungseigenschaften in Rezeptur 1 dargestellt. Bei SE1 zeigt sich bereits der Einfluss der Amylopektinstärke (APS) in dem eingeschränkten Modifikationsrahmen gegenüber dem Vergleichsprodukt SE10, SE1 zeichnet sich durch eine höhere Standfestigkeit, eine verlängerte Open Time und eine kürzere Abbindezeit aus. Die verbesserten Eigenschaften beschränken sich allerdings auf einen engen Bereich hinsichtlich des Derivatisierungsgrades, wie es an den Beispielen SE1, SE2 und SE4 zu sehen ist. Bei gleicher Vernetzung aber unterschiedlichem Propoxylierungsgrad sinken bei SE2 und SE4 die Open Time und die Abrutschfestigkeit sinkt ebenfalls mit steigendem Propoxylierungsgrad, wenn auch das Erstarrungsende früher einsetzt. Bei einem molekularen Substitutionsgrad von 0,2 wie bei SE3 tritt eine Verbesserung der erfindungsgemäßen Eigenschaften auf.

SE8 zeichnet sich gegenüber SE2 durch eine zusätzliche hohe Carboxymethylierung aus, diese zusätzliche Modifikation verschlechtert die Eigenschaften aber wieder. Eine geringere Carboxymethylierung wie beim Beispielmuster SE9 hingegen zeigt stark verbesserte Eigenschaften gegenüber dem uncarboxymethylierten SE2.

An den beiden hoch carboxymethylierten Produkten SE7 und SE8 ist darüber hinaus ersichtlich, dass der Vernetzungsgrad an die sonstige Derivatisierung angepasst sein soll. So ist in diesem Fall (SE8) eine Vernetzung kontraproduktiv. Zwar tritt dadurch das Erstarrungsende früher ein, allerdings leidet die Standfestigkeit deutlich unter dieser Modifikation. Die marktgängigen Referenzmuster M1 und M2 sind in vielen Patenten beschriebene Hydroxypropylstärken auf Kartoffelstärkebasis. Sowohl M1 (Hydroxypropylkartoffelstärke) als auch M2 (Hydroxpropylcarboxymethylkartoffelstärke) weisen eine deutliche Abbindeverzögerung auf und zeigen auch Mängel hinsichtlich der Abrutschfestigkeit. Beim Vergleich zwischen M2 und einer ähnlich modifizierten amylopektinreichen Stärke zeigt sich außerdem, dass allein die Änderung des Rohstoffs noch keinen Vorteil bringt. Aus den angegebenen Messwerten ist vielmehr klar ersichtlich, dass nur durch eine Kombination aus Amylopektinstärke, einer Vernetzung und vorzugsweise zumindest einer weiteren Modifikation, bevorzugt aber zwei zusätzlichen Modifikationen, die Dünnbettmörteleigenschaften die Eigenschaften erfindungsgemäß verbessert werden können.

**Tabelle 2: Produktcharakterisierung**

| Stärkeether | Rohstoff | MS PO | Viskosität 5%ig [mPas] | DS CM | Vernetzung |
|---|---|---|---|---|---|
| SE1 | APS | 0,4 | 2400 | 0 | Vernetzt |
| SE2 | APS | 0,5 | 2800 | 0 | Vernetzt |
| SE3 | APS | 0,2 | 2300 | 0 | Vernetzt |
| SE4 | APS | 0,8 | 3040 | 0 | Vernetzt |
| SE5 | APS | 0,5 | 390 | 0 | 0 |
| SE6 | APS | 0,2 | 1180 | 0 | Vernetzt |
| SE7 | APS | 0,5 | 380 | 0,3 | 0 |
| SE8 | APS | 0,5 | 4400 | 0,3 | Vernetzt |
| SE9 | APS | 0,4 | 5910 | 0,11 | Vernetzt |
| SE10 | MS | 0,4 | 1600 | 0 | Vernetzt |
| M1 | KS | 0,4 | 270 | 0 | 0 |
| M2 | KS | 0,2 | 450 | 0,3 | 0 |

**Tabelle 3: Anwendungseigenschaften in Rezeptur 1**

| Stärkeether | W/F | Abrutschen [mm] | Rel. Open Time [%] | Erstarrungsende [h] |
|---|---|---|---|---|
| SE1 | 0,25 | <0,5 | 130 | 23 |
| SE2 | 0,25 | <0,5 | 110 | 18 |
| SE3 | 0,26 | <0,5 | 163 | 17,5 |
| SE4 | 0,24 | 6 | 98 | 18,5 |
| SE5 | 0,24 | <0,5 | 98 | 26,5 |
| SE6 | 0,25 | 3 | 217 | 20 |
| SE7 | 0,24 | 2 | 120 | 28 |
| SE8 | 0,26 | 20 | 120 | 24 |
| SE9 | 0,26 | <0,5 | 217 | 21,5 |
| SE10 | 0,25 | 4 | 110 | 25 |
| M1 | 0,24 | 3 | 100 | 31 |
| M2 | 0,25 | 2 | 110 | 28 |

Bei vergleichenden Untersuchungen von Wachsstärken auf unterschiedlicher Rohstoffbasis konnte kein Vorteil eines speziellen Rohstoffs festgestellt werden. Wachsmaisstärke und Wachs- bzw. Amylopektinkartoffelstärke zeigten beinahe identisches Verhalten.

## Patentansprüche

1. Mineralisch gebundene Baustoffzusammensetzung enthaltend ein kaltwasserlösliches, vernetztes Stärkederivat einer amylopektinreichen Stärke mit einem Amylopektingehalt von größer als 85% und mit einer 5%ig wässrigen Brookfieldviskosität des reinen Stärkederivats von 2000-7000 mPas bei 100 upm und 20°C, wobei das kaltwasserlösliche, vernetzte Stärkederivat durch eine gleichzeitige Hydroxypropylierung mit einem Substituierungsgrad MS von 0,1 und bis zu 0,8 und eine Vernetzungsreaktion bei einem molaren Verhältnis von Vernetzungsreagenz zu Anhydroglucoseeinheit (AGU) von 0,0015 bis 0,01, für 3 h bei 110 °C und einem Überdruck von 5 bar, erhältlich ist.

2. Zusammensetzung nach Anspruch 1, **dadurch gekennzeichnet, dass** die Stärke eine amylopektinreiche Getreidestärke, vorzugsweise eine Wachsmaisstärke, oder eine amylopektinreiche Kartoffelstärke ist.

3. Zusammensetzung nach Anspruch 1 oder 2, **dadurch gekennzeichnet, dass** das Stärkederivat zusätzlich carboxyalkyliert mit einer Gruppe mit 1 bis 20 Kohlenstoffatomen, vorzugsweise carboxymethy-liert, ist.

4. Zusammensetzung nach Anspruch 3, dessen Carboxyalkylierungsgrad DS zwischen 0,01 und 0,25 liegt, bevorzugt zwischen 0,04 und 0,2.

5. Zusammensetzung nach einem der Ansprüche 1 bis 4, **dadurch gekennzeichnet, dass** das Stärkederivat zusätzlich hydrophobiert ist.

6. Zusammensetzung nach Anspruch 5, **dadurch gekennzeichnet, dass** der Derivatisierungsgrad der Hydrophobierung zwischen MS 0,01 und 0,1 liegt.

7. Zusammensetzung nach einem der Ansprüche 1 bis 6, zusätzlich umfassend einen Zusatzstoff ausgewählt aus Celluloseether, Dispersionspulver, Beschleuniger, Verzögerer, Verflüssiger und/oder Luftporenmittel.

8. Verwendung eines kaltwasserlöslichen, vernetzten Stärkederivats nach einem der Ansprüche 1 bis 7 in zementären und/oder dispersionsmodifizierten Bauklebern, vorzugsweise in einem Fliesenkleber, im Speziellen zum Verlegen von keramischen Bekleidungen, oder in Wärmedämmverbundsystemen.

## Claims

1. Mineral-bound building material composition containing a cold-water-soluble, cross-linked starch derivative of an amylopectin-rich starch having a amylopectin content of greater than 85 % and having a 5 % aqueous Brookfield viscosity of the pure starch derivative of 2000-7000 mPas at 100 rpm and 20 °C, wherein the cold-water-soluble, cross-linked starch derivative is obtainable by a simultaneous hydroxypropylation with a degree of substitution MS of 0.1 and up to 0.8 and a cross-linking reaction at a molar ratio of cross-linking reagent to anhydroglucose unit (AGU) of 0.0015 to 0.01 for 3 h at 110 °C and an overpressure of 5 bar.

2. Composition according to claim 1, **characterised in that** the starch is an amylopectin-rich cereal starch, preferably a waxy corn starch or an amylopectin-rich potato starch.

3. Composition according to either claim 1 or claim 2, **characterised in that** the starch derivative is additionally carboxyalkylated with a group having 1 to 20 carbon atoms, preferably carboxymethylated.

4. Composition according to claim 3, the degree of carboxyalkylation DS of which is between 0.01 and 0.25, preferably between 0.04 and 0.2.

5. Composition according to any of claims 1 to 4, **characterised in that** the starch derivative is additionally water-repellent.

6. Composition according to claim 5, **characterised in that** the degree of derivatisation of the water-repellency is between MS 0.01 and 0.1.

7. Composition according to any of claims 1 to 6, additionally comprising an additive selected from cellulose ether, dispersion powder, accelerator, retarder, liquefier, and/or air-entraining additive.

8. Use of a cold-water-soluble, cross-linked starch derivative according to any of claims 1 to 7 in cementitious and/or dispersion-modified construction adhesives, preferably in a tile adhesive, specifically for laying ceramic coverings, or in thermal insulation composite systems.

## Revendications

1. Composition de matériau de construction à liant minéral, comprenant un dérivé d'amidon réticulé soluble dans l'eau froide provenant d'un amidon riche en amylopectine ayant une teneur en amylopectine supérieure à 85 % et ayant une viscosité de Brookfield aqueuse à 5 % du dérivé d'amidon pur de 2000 à 7000 mPas à 100 t/m et 20 °C, dans laquelle le dérivé d'amidon réticulé soluble dans l'eau froide peut être obtenu par une hydroxypropylation simultanée à un degré de substitution MS de 0,1 et allant jusqu'à 0,8 et une réaction de réticulation pour un rapport molaire du réactif de réticulation sur l'unité anhydroglucose (AGU) de 0,0015 à 0,01, pendant 3 h à 110 °C et une surpression de 5 bar.

2. Composition selon la revendication 1, **caractérisée en ce que** l'amidon est un amidon de céréale riche en amylopectine, de préférence un amidon de maïs cireux, ou un amidon de pommes de terre riche en amylopectine.

3. Composition selon la revendication 1 ou 2, **caractérisée en ce que** le dérivé d'amidon est en plus carboxyalkylé avec un groupe ayant de 1 à 20 atomes de carbone, de préférence carboxyméthylé.

4. Composition selon la revendication 3, dont le degré de carboxyalkylation DS se situe entre 0,01 et 0,25, de préférence entre 0,04 et 0,2.

5. Composition selon l'une des revendications 1 à 4, **caractérisée en ce que** le dérivé d'amidon est en plus hydrophobisé.

6. Composition selon la revendication 5, **caractérisée en ce que** le degré de dérivatisation de l'hydrophobisation se situe entre MS 0,01 et 0,1.

7. Composition selon l'une des revendications 1 à 6, comprenant en outre un additif choisi parmi un éther de cellulose, une poudre de dispersion, un accélérateur, un retardant, un liquéfiant et/ou un agent entraîneur d'air.

8. Utilisation d'un dérivé d'amidon réticulé soluble dans l'eau froide selon l'une des revendications 1 à 7 dans des colles pour le bâtiment à base de ciment et/ou modifiées par dispersion, de préférence dans une colle pour carrelage, en particulier pour la pose de parements en céramique, ou dans des systèmes composites d'isolation thermique.
